# EUROPÄISCHE PATENTSCHRIFT

(11) **EP 0 532 849 B1**
(45) Veröffentlichungstag und Bekanntmachung des Hinweises auf die Patenterteilung: **28.06.1995**
(21) Anmeldenummer: 92111539.0
(22) Anmeldetag: 08.07.1992
(51) Int. Cl.: B64G 1/50, F28D 5/00

(54) **Verdampfungswärmetauscher**
Evaporative heat exchanger
Echangeur de chaleur à évaporation

(30) Priorität: 14.09.1991 DE 4130693
(43) Veröffentlichungstag der Anmeldung: 24.03.1993
(73) Patentinhaber: Daimler-Benz Aerospace Aktiengesellschaft, 80995 München (DE)
(72) Erfinder: Leidinger, Bernhard, Prof., Dr., W-2803 Weyhe-Leeste (DE)
(74) Vertreter: Hansmann, Dierk, Dipl.-Ing.

(56) Entgegenhaltungen:
- EP-A- 0 111 673
- DE-A- 3 419 442
- DE-C- 3 718 873
- GB-A- 1 129 404
- PATENT ABSTRACTS OF JAPAN vol. 14, no. 221 (M-971)(4164) 10. Mai 1990 & JP-A-252991

## Beschreibung

Die Erfindung betrifft einen Verdampfungswärmetauscher gemäß dem Oberbegriff des Patentanspruchs 1.

Bei Raumfahrzeugen, die sich in der Auf- oder Abstiegsphase durch die Erdatmosphäre befinden oder die in der Erdumlaufbahn extremen thermischen Belastungen ausgesetzt sind, gilt es, die entstehende Wärme sicher und zuverlässig abzuführen. Zu diesem Zweck werden unter anderem Verdampfungswärmetauscher eingesetzt.

Grundlegendes Prinzip derartiger Wärmetauscher ist es, daß das zu kühlende Medium eines aktiven Flüssigkeitskreislaufes zur Wärmeabfuhr mit einem zu verdampfenden Medium in wärmeübertragenden Kontakt gebracht wird, welches in einem mitgeführten Vorratsbehälter gelagert ist und das anschließend in Form von Dampf vom Raumfahrzeug in die Umgebung abgelassen wird.

Um das zu verdampfende Medium durch eine möglichst vollständige Verdampfung optimal auszunutzen, ist es dabei wichtig, einen möglichst guten thermischen Kontakt und damit einen möglichst vollständigen Wärmeübergang zwischen der Kühlflüssigkeit einerseits und dem zu verdampfenden Medium andererseits sicherzu stellen.

Bei einer bekannten Gattung derartiger Wärmetauscher, wie sie beispielsweise in der DE-PS 37 18 873 beschrieben ist, strömt die Kühlflüssigkeit über einzelne Kanäle durch einen Prozeßraum, in den das zu verdampfende Medium über ein Einlaßventil tröpfchenförmig eingesprüht wird. Bei einer zweiten Gattung von Verdampfungswärmetauschern, der auch die Erfindung zuzurechnen ist, fließt hingegen die Kühlflüssigkeit offen durch den Prozeßraum, während das zu verdampfende Medium durch einzelne, in der Regel bündelartig angeordnete Kanäle durch diesen Raum geleitet wird. Die Kühlflüssigkeit wird dabei zusätzlich durch im Prozeßraum angeordnete Blenden zu einem mäanderförmigen Strömungsverlauf gezwungen.

Bei einem derartigen Verdampfungswärmetauscher besteht, sofern er mit Wasser als Kühlflüssigkeit betrieben wird, die Gefahr der Vereisung. Um dieser Gefahr vorzubeugen, kann es unter Umständen erforderlich sein, die Verdampfungstemperatur des zu verdampfenden Mediums, für das häufig Ammoniak verwendet wird, zu beeinflussen.

Aufgabe der Erfindung ist es, einen Verdampfungswärmetauscher gemäß dem Gattungsbegriff so auszubilden, daß er eine einfache und zugleich funktionssichere Möglichkeit zur Regelung der Verdampfungstemperatur des zu verdampfenden Mediums bietet.

Die Erfindung löst diese Aufgabe durch eine Wärmetauscher mit den kennzeichnenden Merkmalen des Patentanspruchs 1. Erfindungsgemäß wird dabei der Druck des verdampften Mediums durch eine Variation des Auslaßquerschnittes beeinflußt und auf diese Weise zugleich auch die Verdampfungstemperatur so beeinflußt, daß eine Vereisungsgefahr zuverlässig ausgeschlossen ist. Auf besonders einfache Weise geschieht dies dadurch, daß der Dampfstrom in mehrere Teilströme aufgeteilt wird, die jeweils über separate Auspuffblenden geleitet werden. Durch gezieltes Öffnen oder Schließen einzelner dieser Blenden kann dann auf einfache Weise der Verdampfungsdruck beeinflußt werden. Das Öffnen oder Schließen kann dabei in weiterer Ausgestaltung der Erfindung durch eine von der Eintrittstemperatur der Kühlflüssigkeit beaufschlagte Regelungseinrichtung, im einfachsten Fall eine Bimetallfeder, erfolgen. Dies ist insbesondere dann möglich, wenn der Dampfstrom in einen Basisstrom, dessen Blende stets geöffnet bleibt, sowie in wenigstens drei Zusatzdampfströme aufgeteilt wird. Selbst wenn bei einem Störfall in einer derartigen Anordnung eine der Zusatzblenden geschlossen bleiben sollte, steigt die Verddampfungstemperatur nur geringfügig über den Sollwert an und umgekehrt. In beiden Fällen bleibt die Anordnung voll betriebsfähig.

Nachfolgend soll die Erfindung anhand der Zeichnung näher erläutert werden. Es zeigen:
- Fig. 1: einen Längsschnitt durch einen ersten Verdampfungswärmetauscher,
- Fig. 2: eine seitliche Ansicht der Anordnung gemäß Fig. 1,
- Fig. 3: die Anordnung gemäß Fig. 1 in Draufsicht,
- Fig. 4 bis 6: Vertikalschnitte durch unterschiedliche Bereiche der in Fig. 1 dargestellten Anordnung,
- Fig. 7: eine Prinzipskizze eines zweiten Verdampfungswärmetauschers,
- Fig. 8: einen Schnitt durch einen Wärmetauscher gemäß Fig. 7,
- Fig. 9: einen Schnitt durch den Auslaßbereich des in Fig. 7 dargestellten Wärmetauschers und
- Fig. 10: einen Schnitt durch einen Teilbereich der in Fig. 9 gezeigten Anordnung.

In den Figuren sind gleiche Bauteile mit den gleichen Bezugszeichen versehen.

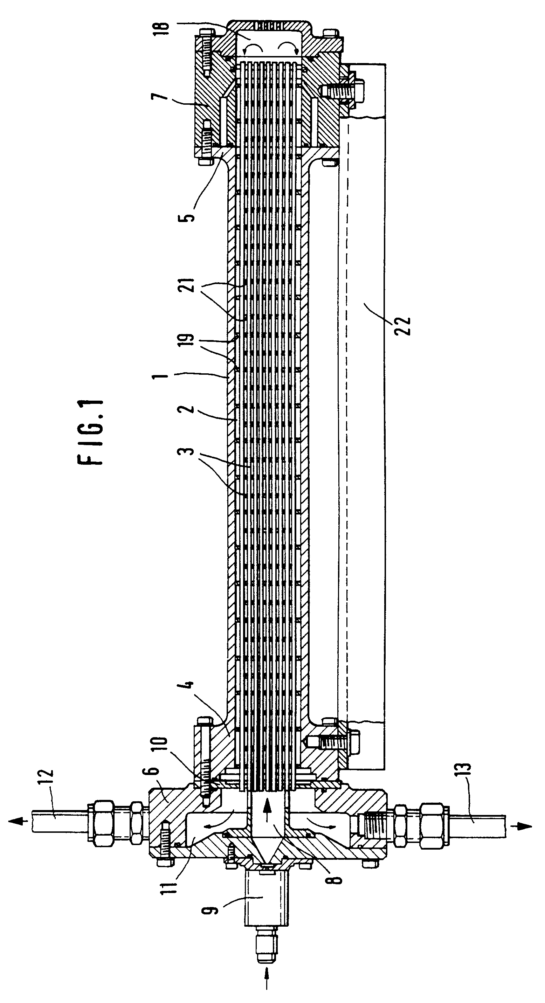

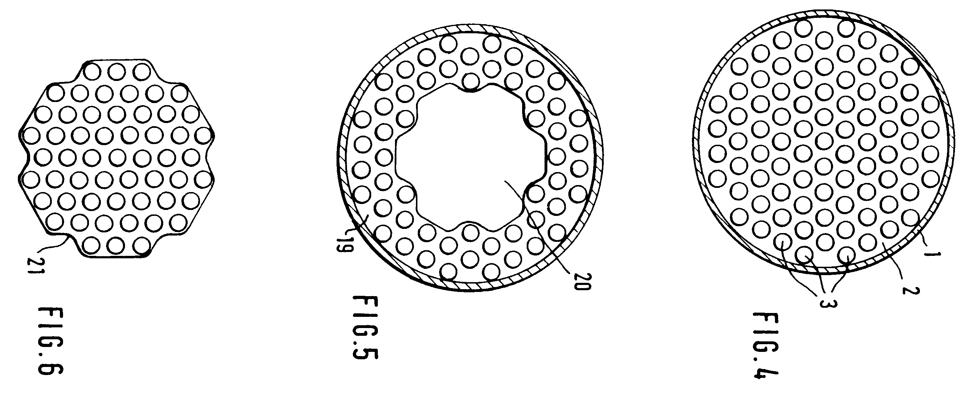

Der in Fig. 1 dargestellte Verdampfungswärmetauscher besteht aus einem zylindrischen Gehäuse 1, in dem in einem Prozeßraum 2 ein Bündel gleichartiger Röhrchen 3 angeordnet ist, die parallel zur Längsachse des Gehäuses 1 verlaufen und die, wie insbesondere die Querschnittdarstellung in Fig. 4 zeigt, gleichmäßig über den gesamten Querschnitt des Prozeßraumes verteilt sind. Der Abstand der einzelnen Röhrchen 3 untereinander ist dabei mindestens gleich groß gewählt wie der Abstand, den der gedachte Rand des Röhrchenbündels von der Innenwand des Gehäuses 1 aufweist. Das Gehäuse 1 weist in seinen Enden jeweils einen Anschlußflansch 4 bzw. 5 auf, über den das Gehäuse 1 mit zwei Abschlußkörpern 6 und 7 verbunden ist, deren Aufbau nachfolgend näher erläutert wird.

Der in der Fig. 1 linke Abschlußkörper 6 weist einen zentralen Einlaßraum 8 für das zu verdampfende Medium, im Fall des hier beschriebenen Ausführungsbeispiels der Erfindung Ammoniak (NH₃), auf, der sich in Richtung auf ein Einlaßventil 9 hin kegelförmig verjüngt. Der Radius des zum Prozeßraum 2 hin offenen Einlaßraumes 8 ist so bemessen, daß er eine innere Gruppe von Röhrchen 3 umfaßt, wobei deren Anzahl in etwa 50 Prozent der Gesamtzahl der vorhandenen Röhrchen 3 beträgt. Diese Röhrchen ragen durch eine Lochplatte 10, die den eigentlichen Abschluß des Prozeßraumes 2 bildet, in das Innere des Einlaßraumes 8 hinein. Die übrigen 50 Prozent des Röhrchenbündels, die den äußeren Ring dieses Bündels bilden, ragen ebenfalls durch die Lochplatte 10 in einen Ringraum 11, der den Einlaßraum 8 umgibt und der mit insgesamt vier, um 90^{o} gegeneinander versetzt angeordneten, Auslaßöffnungen 12 bis 15 für das verdampfte Medium versehen ist.

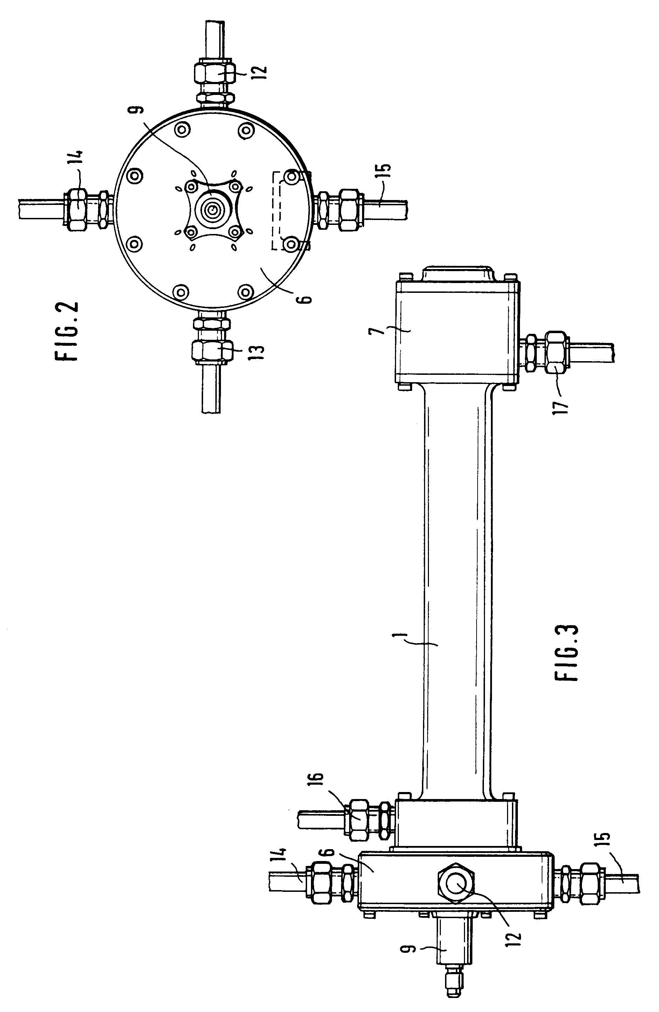

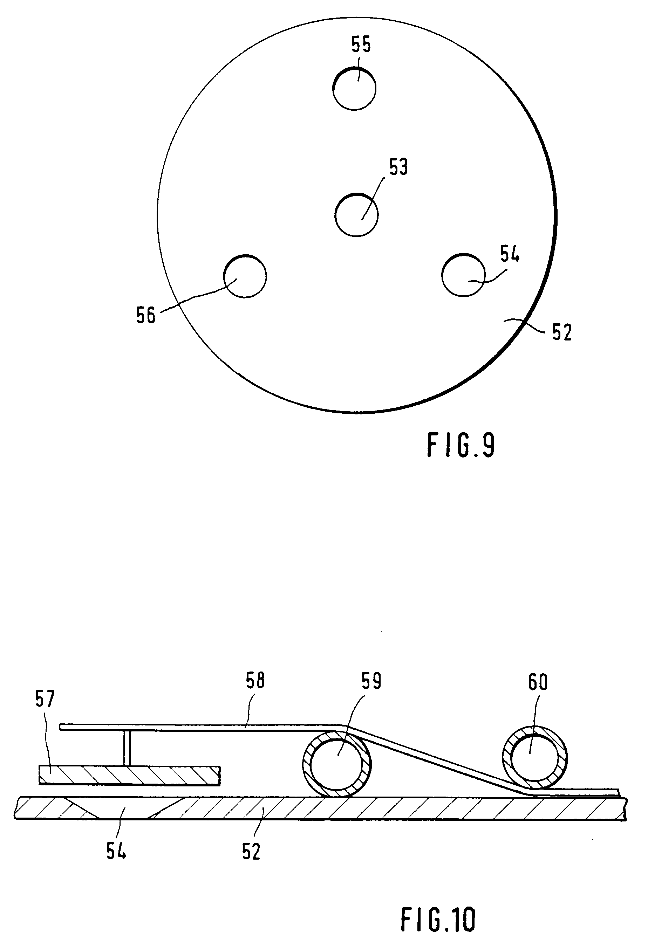

Zwei dieser Auslaßöffnungen 12 bis 15, die bei der Darstellung in Fig. 1 verdeckt sind, sind dabei in Fig. 3 erkennbar. Die Auslaßöffnungen 12 bis 15 sind jeweils durch hier nicht dargestellte Blenden verschließbar, wie sie anhand von Fig. 10 noch näher erläutert werden. In Fig. 3, in der die vorstehend beschriebene Anordnung gegenüber der Darstellung gemäß Fig. 1 um 90^{o} gedreht gezeigt ist, sind ferner ein weiterer Auslaß 16 sowie ein Einlaß 17 erkennbar, die beide für die Kühlflüssigkeit, im vorliegenden Fall Wasser, vorgesehen sind und die direkt mit dem Prozeßraum 2 verbunden sind. Während der Auslaß 16 dabei auf einem Bereich erweiterten Durchmesser des Gehäuses 1 angeordnet ist, befindet sich der Einlaß 17 an einem zylindrischen Teilbereich des in der Zeichnung rechten Abschlußkörpers 7.

Durch diesen letztgenannten Abschlußkörper 7 sind, wie aus Fig. 1 ersichtlich, die das zu verdampfende Medium enthaltenden Röhrchen 3 bis zu einem Sammelraum 18 geführt, der das Innere des Abschlußkörpers 7 begrenzt und über den die Gruppe der inneren Röhrchen 3, die mit dem Einlaßraum 8 verbunden sind, mit der Gruppe der außenliegenden Röhrchen 3 in Verbindung stehen. Schließlich sind, jeweils alternierend, im Inneren des Prozeßraumes 2 zwei verschiedene Arten von Umlenkblenden angeordnet. Bei diesen Umlenkblenden handelt es sich zum einen um Lochblenden 19, wie sie in Fig. 5 dargestellt sind und bei denen in der Mitte des Prozeßraumes 2 eine Öffnung 20 verbleibt. Zum anderen handelt es sich um Ringblenden 21, die eine Öffnung in Form eines Ringspaltes im Prozeßraum 2 freigeben. Schließlich ist die gesamte Anordnung auf einen Träger 22 montiert.

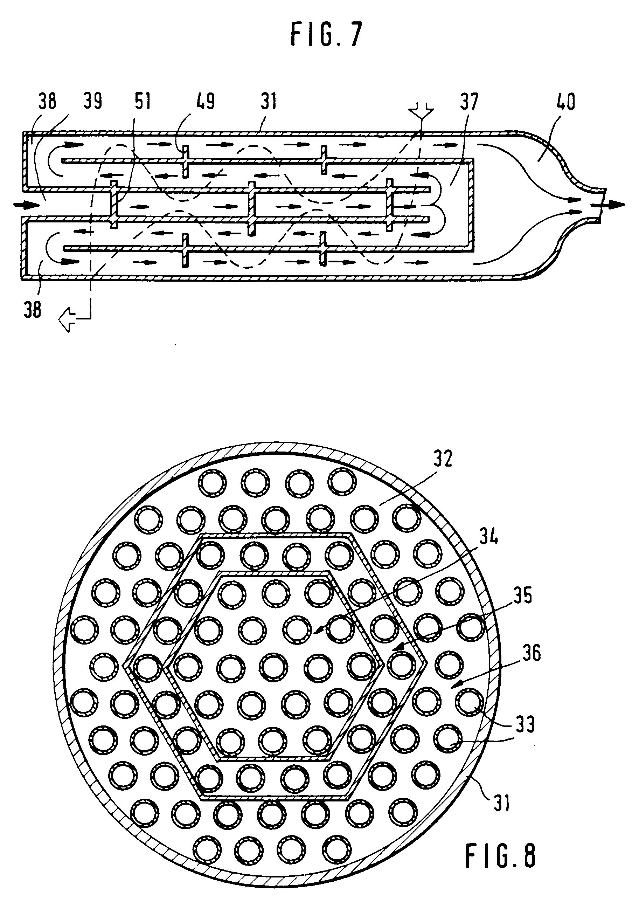

Die Wirkungsweise der vorstehend beschriebenen Anordnung soll anhand eines zweiten Ausführungsbeispiels der Erfindung erläutert werden, das zunächst in Fig. 7 mittels einer stark vereinfachten Prinzipskizze dargestellt ist. In dieser Prinzipskizze wurde aus Gründen der Übersichtlichkeit auf die Darstellung des zwischen den einzelnen, das zu verdampfende Medium führenden Röhrchen 33 vorhandenen Prozeßraumes verzichtet. Wie aus der Darstellung des Querschnitts dieses Wärmetauschers in Fig. 8 ersichtlich ist, sind in diesem Fall die im Inneren eines Gehäuses 31 in einem Prozeßraum 32 angeordneten Röhrchen 33 zu insgesamt drei Gruppen zusammengefaßt: Einer Zentralgruppe 34, bestehend aus etwa 20 bis 30 im Zentrum des Bündels angeordneten Röhrchen, einer Zwischengruppe 35 mit etwa der gleichen Anzahl an Röhrchen sowie einer Randgruppe 36 mit etwa 30 bis 40 Röhrchen.

An den beiden Ende des Prozeßraumes 32 sind diese Gruppen von Röhrchen über Sammelräume miteinander verbunden, und zwar die Gruppen 34 und 35 über den zentralen Sammelraum 37 und die Gruppen 35 und 36, auf der Einlaßseite des zu verdampfenden Mediums, über den ringförmigen Sammelraum 38, der die Einlaßöffnung 39 für das zu verdampfende Medium umgibt. Schließlich wird das verdampfte Medium in einem Auslaßraum 40 gesammelt. Letzterer wird durch eine in Fig. 9 dargestellte Platte 52 verschlossen, in der mehrere Lochblenden 53 bis 56 angeordnet sind. Von diesen Blenden ist die zentral angeordnete Blende 53 nicht veränderbar, während die Blenden 54 bis 56 jeweils durch einen Mechanismus verschließbar sind, wie er in Fig. 10 gezeigt ist.

Dieser Mechanismus besteht aus einer Klappe 57, die an einer Bimetallfeder 58 gehaltert ist, welche ihrerseits zwischen zwei Röhrchen 59 und 60 eingesteckt ist. Letztere gehören zu einem Loop, der von einem Teil der in den Prozeßraum 32 eintretenden Kühlflüssigkeit durchströmt wird.

Auch bei diesem Verdampfungswärmetauschers sind in alternierender Folge Umlenkblenden 49 und 51 vorgesehen. Die Ein- und Auslaßöffnung für die durch den Prozeßraum fließende Kühlflüssigkeit wurden bei dieser Darstellung fortgelassen. Die Bewegungsrichtungen für die Flüssigkeit, im vorliegenden Fall wiederum Wasser, und das zu verdampfende Medium, Ammoniak, sind jeweils durch Pfeile gekennzeichnet.

Die Kühlflüssigkeit tritt in den in der Zeichnung rechten Teil des Prozeßraumes mit einer Einlaßtemperatur ein, die im Fall des hier beschriebenen Ausführungsbeispiels zwischen etwa 24 und 67^{o}C liegt. Sie strömt dann zwischen den Röhrchen mit dem zu verdampfenden Medium hindurch, wobei sie den größten Teil der in ihr enthaltenen Wärme auf dieses Medium überträgt, bevor sie mit einer Temperatur von etwa 5 bis 6^{o}C aus dem Prozeßraum austritt. Die im Prozeßraum alternierend angeordneten Umlenkblenden bewirken dabei, wie aus Fig. 6 ersichtlich, einen mäanderförmigen Strömungsverlauf der Kühlflüssigkeit, was zu ständig erneuten Durchmischungen und damit zu einer sehr homogenen Temperaturverteilung der zwischen den Röhrchen hindurchfließenden Stränge der Kühlflüssigkeit führt.

Auf der anderen Seite wird das zu verdampfende Medium mit einer Einlaßtemperatur von etwa -10^{o}C in die Zentralgruppe der Röhrchen eingespeist. Beim Durchströmen der Röhrchen heizt es sich bis auf Verdampfungstemperatur auf und beginnt eventuell bereits mit der Verdampfung. Am Ende der Röhrchen gerät es in den für alle durchströmten Röhrchen der Zentralgruppe gemeinsamen Sammelraum, der sich am Auspuffende befindet, von wo es umgelenkt und in die Röhrchen der Zwischengruppe eingeleitet wird. Hierbei vermischt es sich aufgrund der Umlenkung um 180^{o}.

In allen Zentralröhrchen herrschen damit gleiche Strömungsbedingungen. Das Ammoniak strömt jetzt in der gleichen Richtung wie das zu kühlende Wasser von der Ammoniak-Auspuffseite zur Ammoniak-Einspritzseite und verdampft dabei nahezu vollständig. Dabei wird es, da das Ende der Zentralröhrchen an der Wasseraustrittsseite des Wärmetauschers liegt, maximal bis auf dessen Austrittstemperatur (6^{o}C) überhitzt. Es strömt in den zweiten Sammelraum, wo sich bei einer erneuten Umlenkung um 180^{o} wiederum nahezu homogene Anströmbedingungen für die nächste Strömungsstrecke des Ammoniaks ergeben.

Schließlich strömt das Ammoniak - mit einigen wenigen Resttropfen beladen - erneut der Wasserströmung entgegen durch die Randröhrchen zur Wassereintritts- und Ammoniak-Austrittsseite des Wärmetauschers. Hierbei erwärmt es sich bis auf eine Resttemperaturdifferenz von etwa 5 bis 10^{o}C zur Wassereintrittstemperatur, die, je nach Lastfallt, zwischen 24 und 67^{o}C liegt und tritt schließlich in den von der Platte 52 begrenzten Auslaßraum 40. Durch Öffnen und Schließen einer oder mehrerer der Blenden 54 bis 56 kann nunmehr der Verdampfungsdruck so eingestellt werden, daß eine Vereisungsgefahr für die Kühlflüssigkeit ausgeschlossen ist. Die Variation der Blendenöffnung erfolgt dabei in Abhängigkeit von der Eintrittstemperatur der Kühlflüssigkeit, so daß jederzeit der optimale Betriebszustand gewährleistet ist.

## Patentansprüche

1. Verdampfungswärmetauscher mit wenigstens einem aktiven Flüssigkeitskühlkreislauf zur Abführung von Wärme in Raumfahrzeugen unter Schwerelosigkeit sowie bei unterschiedlichen Beschleunigungen, mit einem Prozeßraum, in dem voneinander beabstandet und zu einem Bündel zusammengefaßt Röhrchen angeordnet sind, die von dem zu verdampfenden Medium durchströmt werden und zwischen die die Kühlflüssigkeit einleitbar ist, und bei dem die Strömungsrichtung der Kühlflüssigkeit durch Blenden beeinflußbar ist, dadurch gekennzeichnet, daß Mittel vorgesehen sind, durch die die Querschnittsfläche des Auslasses ( 12 bis 15, 40) für das zu verdampfende Medium in Abhängigkeit von der Temperatur der in den Prozeßraum (2,32) eingespeisten Kühlflüssigkeit veränderbar ist.

2. Verdampfungswärmetauscher nach Anspruch 1, dadurch gekennzeichnet, daß den Endbereichen der Röhrchen (3,33) für das zu verdampfende Medium Auslaßorgane (53 bis 56) zugeordnet sind, die zumindest teilweise temperaturabhängig verschließbar sind.

3. Verdampfungswärmetauscher nach Anspruch 2, dadurch gekennzeichnet, daß die Auslaßorgane aus Lochblenden (53 bis 56) bestehen, die in einer den Auslaßbereich (40) für das zu verdampfende Medium verschließenden Platte (52) angeordnet sind.

4. Verdampfungswärmetauscher nach Anspruch 3, dadurch gekennzeichnet, daß zumindest einige der Lochblenden (53 bis 56) über Klappen (57) verschließbar sind.

5. Verdampfungswärmetauscher nach Anspruch 4, dadurch gekennzeichnet, daß die Klappen (57) über Bimetallfedern (58) beaufschlagbar sind.

6. Verdampfungswärmetauscher nach Anspruch 5, dadurch gekennzeichnet, daß die Bimetallfedern (58) in thermischem Kontakt mit Leitungselementen (59,60) stehen, die von einem Teil der in den Prozeßraum (2,32) eingespeisten Kühlflüssigkeit durchflossen werden.

## Claims

1. Evaporation heat exchanger with at least one active liquid cooling circuit for dissipating heat in space vehicles - under zero-gravity conditions and at different rates of acceleration, having a process chamber in which are disposed small tubes, spaced apart from one another and combined into a bundle, through which the evaporation medium flows and between which the cooling liquid may be introduced, and wherein the flow direction of the cooling liquid may be influenced by diaphragms, characterized in that means are provided by means of which the cross-sectional area of the outlet (12 to 15, 40) for the evaporation medium is variable as a function of the temperature of the cooling liquid fed into the process chamber (2, 32).

2. Evaporation heat exchanger according to claim 1, characterized in that associated with the end regions of the small tubes (3, 33) for the evaporation medium are outlet elements (53 to 56) which are closable at least partially as a function of temperature.

3. Evaporation heat exchanger according to claim 2, characterized in that the outlet elements comprise apertured diaphragms (53 to 56) which are disposed in a plate (52) which closes the outlet region (40) for the evaporation medium.

4. Evaporation heat exchanger according to claim 3, characterized in that at least some of the apertured diaphragms (53 to 56) are closable by means of flaps (57).

5. Evaporation heat exchanger according to claim 4, characterized in that the flaps (57) may be acted upon by bimetallic springs (58).

6. Evaporation heat exchanger according to claim 5, characterized in that the bimetallic springs (58) are in thermal contact with line elements (59, 60) through which some of the cooling liquid fed into the process chamber (2, 32) flows.

## Revendications

1. Echangeur thermique d'évaporation avec au moins un circuit actif de refroidissement de liquide, pour évacuer de la chaleur dans des véhicules spatiaux en apesanteur ainsi que pour différentes accélérations, avec une chambre de processus dans laquelle sont disposés des petits tubes distants les uns des autres et réunis en un faisceau, qui sont parcourus par le fluide à évaporer et entre lesquels est introduit le liquide de refroidissement, chambre dans laquelle la direction d'écoulement du liquide de refroidissement peut être influencée par des diaphragmes, échangeur thermique d'évaporation caractérisé en ce qu'il est prévu des moyens grâce auxquels la surface de section transversale de l'échappement (12 à 15, 40), pour le fluide à évaporer, est susceptible d'être modifiée en fonction de la température du liquide de refroidissement introduit dans la chambre de processus (2, 32).

2. Echangeur thermique d'évaporation selon la revendication 1, caractérisé en ce qu'aux zones terminales des petits tubes (3, 33) pour le fluide à évaporer, sont associés des organes d'échappement (53 à 56) qui sont susceptibles d'être fermés au moins partiellement en fonction de la température.

3. Echangeur thermique d'évaporation selon la revendication 2, caractérisé en ce que les organes d'échappement consistent en des sténopés (53 à 56), qui sont disposés dans une plaque (52) fermant la zone d'échappement (40) pour le fluide à évaporer.

4. Echangeur thermique d'évaporation selon la revendication 3, caractérisé en ce que tout au moins quelques uns des sténopés (53 à 56) sont susceptibles d'être fermés par des clapets (57).

5. Echangeur thermique d'évaporation selon la revendication 4, caractérisé en ce que les clapets (57) sont susceptibles d'être actionnés par des ressorts bimétalliques.

6. Echangeur thermique d'évaporation selon la revendication 5, caractérisé en ce que les ressorts bimétalliques (58) sont en contact thermique avec des éléments de conduites (59, 60), qui sont parcourus par une partie du liquide de refroidissement introduit dans la chambre de processus (2, 32).
